(19) Europäisches Patentamt / European Patent Office / Office européen des brevets

(11) **EP 4 647 743 A1**

(12) **EUROPEAN PATENT APPLICATION**

(43) Date of publication:
**12.11.2025 Bulletin 2025/46**

(21) Application number: **24174583.5**

(22) Date of filing: **07.05.2024**

(51) International Patent Classification (IPC):
**G01N 21/65** (2006.01)     **B82Y 40/00** (2011.01)
**B82Y 30/00** (2011.01)     **B82Y 20/00** (2011.01)

(52) Cooperative Patent Classification (CPC):
**G01N 21/658; B82Y 20/00; B82Y 30/00; B82Y 40/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Humboldt-Universität zu Berlin 10099 Berlin (DE)**

(72) Inventors:
• **de Nóbrega Chícharo, José Alexandre 12489 Berlin (DE)**
• **Kneipp, Janina 12489 Berlin (DE)**

(74) Representative: **Gulde & Partner Patent- und Rechtsanwaltskanzlei mbB Berliner Freiheit 2 10785 Berlin (DE)**

(54) **SERS SUBSTRATE, METHOD OF ITS MANUFACTURE, AND ITS USE FOR PLASMON-ENHANCED OPTICAL AND CHEMICAL APPLICATIONS**

(57)     The present disclosure refers to a SERS substrate for plasmon-enhanced optical and chemical applications such as surface-enhanced Raman scattering (SERS), a method for its manufacture and its use.

The SERS substrate (1) comprising: a base substrate (10) comprising a base (11) and an array of nanopillars (12) provided on a surface (11a) of the base (11) and extending upwardly therefrom; a first layer (21) of a plasmonic material provided on the surface (11a) of the base (11); and a second layer (22) of a plasmonic material provided on a top surface (12a) of the nanopillars (12).

FIG. 1A

FIG. 1B

FIG. 1C

## Description

### Field of the Disclosure

The present invention relates to a SERS substrate for plasmon-enhanced optical and chemical applications such as surface-enhanced Raman scattering (SERS). The invention further relates to a method for manufacturing the SERS substrate and for a method of using it.

### Technological Background

Surface-enhanced Raman scattering plays a pivotal role in identifying the presence of low-abundance biomolecules, particles, and cells. This sophisticated technique provides crucial structural insights into composition and molecular systems, establishing its significance in a wide array of applications such as diagnostics, environmental monitoring, pharmaceuticals, and various other fields.

There are two primary types of SERS substrates: colloidal/suspension and solid substrates. While colloidal substrates offer exceptionally high signal enhancement, the polydispersity of metal nanostructures in suspension and uncontrolled agglomeration factors can limit signal reproducibility. In contrast, solid substrates may feature metal nanostructures immobilized on a substrate, leading to smaller or even no agglomeration. However, there remains potential for the development of new substrates that could have a more impact on their commercialization. Critical challenges persist, including reproducible material fabrication issues and low batch-to-batch variation, large-scale production obstacles, and practical utility concerns for SERS substrates. This invention primarily addresses these challenges, focusing on improving fabrication cost and batch-to-batch reproducibility.

### Summary of Invention

According to one aspect of the present disclosure, there is provided a SERS substrate for plasmon-enhanced optical and chemical applications such as surface-enhanced Raman scattering, SERS. The SERS substrate comprises: a base substrate comprising a base and an array of nanopillars provided on a surface of the base and extending upwardly therefrom; a first layer of a plasmonic material provided on the surface of the base; and a second layer of a plasmonic material provided on a top surface of the nanopillars.

The SERS substrate according to the invention thus comprises two plasmonic layers, namely the first layer of a plasmonic material provided on the top surface of the base, and the second layer of a plasmonic material provided on a top surface of the nanopillars. By providing plasmonic material at (at least) two levels of the SERS substrate, coupling of the electric fields induced in both layers when irradiated with light from a range of ultraviolet, visible and/or infrared light couple to each other leading to a higher electric field enhancement when compared to single plasmonic material atop the pillars or only on the base. In this way, the electric field induced at the surfaces of the SERS substrate according to the present invention is higher than in conventional substrates in which a plasmonic material is provided at only one level (height).

Moreover, by providing plasmonic material not only on the top of the nanopillars or only on the base, the available surface area for receiving a target species to be examined is large so that a high amount of target species can be adsorbed on the SERS substrate. In this way, the number of scattered photons and hence the scattering signal of the target species is increased. Accordingly, the large area covered by plasmonic material leads to an increase of the signal-to-noise-ratio and hence to an increase in sensitivity.

According to another aspect of the present disclosure, a method for manufacturing the SERS substrate of the present invention is provided. The method comprises: (a) a patterning process of providing a pattern of nanodisks of a masking material on a surface of a substrate body; (b) subjecting the substrate body having the pattern of nanodisks to an etching process so as to remove unprotected material of the substrate body and to obtain the base substrate comprising the base and an array of nanopillars provided on a surface of the base; (c) removing the pattern of nanodisks, and (d) depositing a plasmonic material on the base substrate having the array of nanopillars to obtain a first layer of the plasmonic material provided on the surface of the base and a second layer of a plasmonic material provided on a top surface of the nanopillars.

The manufacturing method of the invention employs state-of-the-art semiconductor microelectronics processing that is preferably conducted in a controlled environment, such as a clean room. The method streamlines nanofabrication down to a four-step process. The method significantly enhances the reproducibility of nanofabrication and ensures consistent batch-to-batch reproducible materials.

Yet another aspect of the present disclosure refers to a method of using the SERS substrate according to the present invention, comprising immobilisation of a target species to the first layer of plasmonic material and to the second layer of plasmonic material; irradiating light of ultraviolet, visible and/or infrared frequency; the first layer and the second layer carrying the target species; and detecting light emitted or absorbed by the target species.

Further aspects of the present disclosure could be learned from the dependent claims or the following description.

## Brief Description of the Drawings

Features will become apparent to those of ordinary skill in the art by describing in detail exemplary embodiments with reference to the attached drawings in which:

Fig. 1    illustrates schematic views of a SERS substrate according to a first embodiment of the invention, (A) side section view, (B) side section view with dimensional indices, (C) top view.

Fig. 2    illustrates schematic views of a SERS substrate according to a second embodiment of the invention, (A) side section view, (B) top view.

Fig. 3    illustrates a side section view of a third embodiment of the invention.

Fig. 4    illustrates a top view of a fourth embodiment of the invention.

Fig. 5    illustrates schematic side section views of process stages of the manufacture of a SERS substrate according to the first and the second embodiment of the invention.

Fig. 6    illustrates a schematic top view on a wafer comprising an ensemble of SERS substrates according to an embodiment of the invention.

Fig. 7    illustrates the results of a simulation of the electric field enhancement of a nanohole in a layer of Au (a: three-dimensional view of the object, b: top view of the electric field enhancement at z = 0 $\mu$m, c: side view of the electric field enhancement) at y = 0 $\mu$m.

Fig. 8    illustrates the results of a simulation of the electric field enhancement of a nanopillar comprising a top layer of Au (a: three-dimensional view of the object, b: top view of the electric field enhancement at z = 0 $\mu$m, c: side view of the electric field enhancement) at y = 0 $\mu$m.

Fig. 9    illustrates the results of a simulation of the electric field enhancement of a nanopillar comprising a top layer of Au on a bottom layer of Au (a: three-dimensional view of the object, b: top view of the electric field enhancement at z = 0 $\mu$m, c: side view of the electric field enhancement) at y = 0 $\mu$m.

## Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially", "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centred on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper", "lower", "top" and "bottom" are defined according to the z-axis. For example, the top surface is positioned at the upper part of the z-axis, whereas the bottom surface is positioned at the lower part of the z-axis.

In the drawings, the sizes of elements may be exaggerated for clarity. For example, in the drawings, the size or thickness of each element may be arbitrarily shown for illustrative purposes, and thus the embodiments of the present disclosure should not be construed as being limited thereto. Thus, the drawings may not be to scale.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

First Embodiment

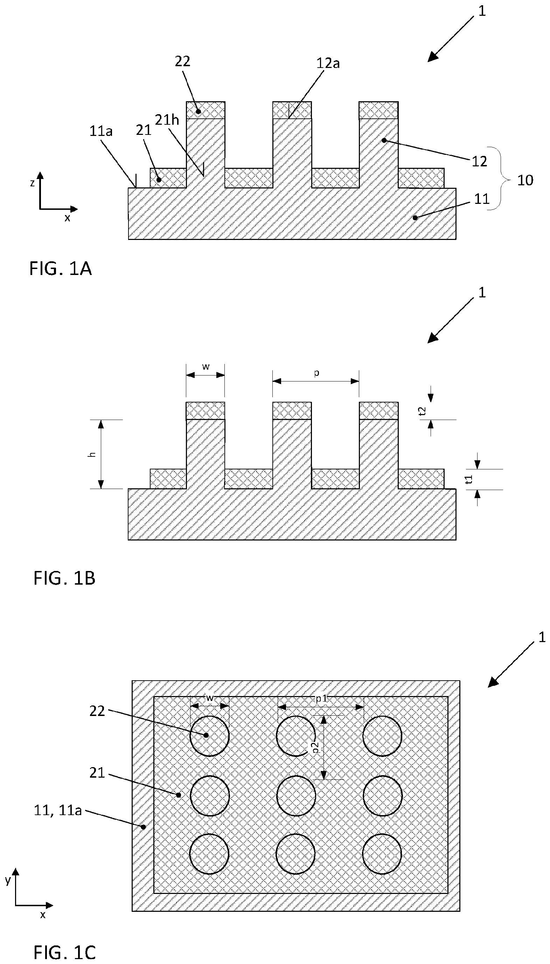

According to an aspect of the present disclosure, a SERS substrate is provided which is usable for plasmon-enhanced optical applications such as surface-enhanced Raman scattering, SERS, and other plasmon-enhanced chemical applications. The general structure of a SERS substrate according to the invention is described with respect to a first embodiment shown in Figure 1, wherein Figures 1A and 1B show a side section view without and with dimensioning signs, respectively, and Figure 1C shows a top view.

The SERS substrate 1 comprises a base substrate 10. The base substrate 10 comprises a base 11 and an array of nanopillars 12 provided on a top surface 11a of the base 11. The nanopillars 12 extend upwardly from the base 11, preferably substantially perpendicular to the base 11. The SERS substrate 1 further comprises a first layer 21 of a plasmonic material provided on the top surface 11a of the base 11 and a second layer 22 of a plasmonic material provided on a top surface 12a of the nanopillars 12, preferably on the top surfaces 12a of each of the nanopillars 12.

The base substrate 10 and the plasmonic layers 21, 22 are now described in more detail.

*Plasmonic layers*

According to the present invention, the SERS substrate comprises at least two plasmonic layers, namely the first layer 21 of a plasmonic material provided on the top surface 11a of the base 11, and the second layer 22 of a plasmonic material provided on a top surface 12a of the nanopillars 12 (Fig. 1A).

Thus, layers of plasmonic material are present at (at least) two different levels (or heights) of the SERS substrate 1, with respect to the z axis shown in the figures. By providing plasmonic material at two levels, coupling of the electric fields induced in both layers 21, 22 when irradiated with light having appropriate wavelength (e.g., ultraviolet, visible or infrared light) couple to each other leading to a high electric field enhancement. In this way, the electric field excited at the surfaces of the SERS substrate 1 according to the present invention is higher than in conventional substrates in which a plasmonic material is provided at only one level (height).

Moreover, as shown in Figure 1C, when viewed from the top, substantially the whole horizontal top surface of the SERS substrate 1 is covered by plasmonic material. This has the additional effect that the available surface area for receiving a target species to be examined by Raman scattering or other optical methods is large so that a high amount of target species can be interacting (e.g., adsorbed) on the SERS substrate 1. In this way, the number of probed molecules in the focal volume is increased leading to an increase of light scattered by the target species. Accordingly, the large area covered by plasmonic material leads to an increase of the signal-to-noise-ratio and hence to an increase in sensitivity.

Preferably, as shown in Fig. 1A, no plasmonic material is provided at the lateral side surfaces of the nanopillars 12 and so the first layer 21 and the second layer 22 are not connected to each other, e.g., the first and second layers 21, 22 are discontinuously provided. In this way, well-defined lateral edges and corners of the first and second plasmonic layers 21, 22 are provided allowing easy excitation of surface plasmons in the layers 21, 22 which in turn lead to a further increase of the electric field enhancement.

Moreover, preferably no plasmonic material is provided below the nanopillars 12. In other words, nanoholes 21h (see Fig. 1A) are present in the first plasmonic layer 21 at the sites where the nanopillars 12 project from the base 11. The nanoholes 21h have substantially the same shape as the top view cross-sections of the nanopillars 12. As shown later, the nanoholes 21h have the effect to further increase the electric field enhancement.

The term "plasmonic material" refers to a material that possesses localized surface plasmons (coherent delocalized electron oscillations) and/or surface plasmon polarization (SPP) at its surface upon radiation with light. Suitable plasmonic material used in the first layer 21 and in the second layer 22 comprises, for example, gold (Au), silver (Ag), platinum (Pt), palladium (Pd), copper (Cu), chromium (Cr), titanium, (Ti), aluminium (Al), and alloys thereof. Each of the first and second layer 21, 22 may include a single layer of a plasmonic material or may include a multi-layer comprising two or more sub-layers of different plasmonic materials. The plasmonic material of the first layer 21 and of the second layer 22 may be different or the same. Preferably, the first and the second layer 21, 22 comprise the same plasmonic material allowing to form the first layer 21 and the second layer 22 in a single fabrication step. In specific embodiments the layers 21, 22 are made of gold.

The first layer 21 is provided with a first thickness t1 and the second layer is provided with a second thickness t2 (see Fig. 1B). The first and the second thickness may be the same or different. Preferably, the first thickness t1 is the same as the second thickness t2 allowing to form the first layer 21 and the second layer 22 in a single manufacturing step.

The first thickness t1 and/or the second thickness t2 is not particular restricted. In one or more embodiments, t1 and/or t2 may be in the range of 0.1 nm to 900 nm.

For example, the first thickness t1 and/or the second thickness t2 may be in the range of 10 nm to 900 nm, preferably in the range of 20 nm to 700 nm, more preferably in the range of 30 nm to 500 nm, even more preferably in the range of 50 nm to 200 nm. In a specific embodiment the first and/or second thickness t1 and t2 may be about 100 nm. For thicknesses outside this range, the efficiency of plasmonic excitation and generation of optical fields is lower, particularly due to damping. In addition, in case of metal films, their electric resistivity is inversely proportional to thickness. Very small thicknesses have high electric resistance not observed in bulk material. Therefore, the high electric resistance impacts the plasmonic activity since electrons cannot freely move. Further, films having very small thicknesses may tend to form islands poorly interconnected.

Alternatively, the first and/or second layer 21, 22 may be a so-called 2D material including a monolayer, a double layer or a multiple layer (e.g., up to 50 or 100 layers) of atoms or molecules of the plasmonic material. Thus, the first thickness t1 and/or the second thickness t2 may be as small as about 0.1 nm (1 Å) or more, for example they may be in the range of 0.1 to 1 nm. It was shown that 2D materials can provide plasmon resonances in a wide frequency range. Layers of 2D materials down to monolayers of atoms may, for instance, be formed by atomic layer deposition.

*Base substrate*

The base substrate 10 comprise the base 11 and the nanopillars 12.

The base 11 and the nanopillars 12 may be separate parts joint together, but are preferably a one-piece part wherein the nanopillars 12 are integrally formed with the base 11. When the base substrate 10 is an integrally formed part, fabrication from a single workpiece is possible reducing the manufacturing effort.

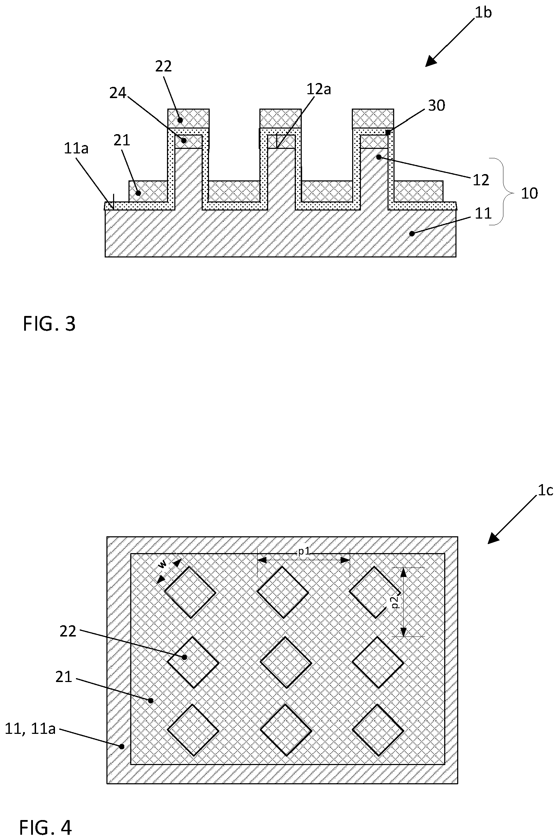

The material of the base 11 and/or the nanopillars 12 is not crucial and may be the same for the base 11 and the nanopillars 12 or independently selected. For example, suitable materials comprise semiconductors, such as silicon (doped or non-doped); glasses; ceramics, such as silicon dioxide ($SiO_2$), aluminum oxide ($Al_2O_3$), silicon nitride (SiN); polymeric materials, metals, such as aluminium; and combinations. In one embodiment the base 11 and the nanopillars 12 are made of silicon, e.g., p-doped silicon. In case the material of the base 11 and/or the nanopillars 12 is a metal, such as aluminium which is itself plasmonic, there is preferably provided an insulating layer between between the first and seconds plasmonic layers 21 and 22 (such as the coating layer 30 shown in Fig. 3).

The shape of the nanopillars 12 is not particularly limited to specific cross-sections when viewed from the top. The cross-section may be circular (as shown in Figure 1C), oval, elliptic, triangular, rectangular, square (as shown in Figure 4), pentagonal, hexagonal or may even have an irregular shape. The shapes of the cross-sections may be the same for all nanopillars 12 or different shapes may be present.

The side surfaces of the nanopillars 12, as seen in the side view of Fig. 1A, may be flat and may extend perpendicular from the base 11.

The nanopillars 12 may be randomly distributed on the base 11 with no specific order or may be regularly (periodically) distributed as shown in the present embodiments. Regular patterns include staggered or non-staggered lines, hexagonal patterns, triangular patterns, for example.

In the example shown in Figure 1, a number of nine nanopillars are provided in three rows each comprising three nanopillars (3 x 3). However, the number and the arrangement of nanopillars is not limited to this example. The invention encompasses any number and arrangement of nanopillars. The number may be as low as 2 and as high as several thousands, millions or even billions. For example, a substrate area of 10 mm x 10 mm with a pitch distance of 200 nm includes $2.5*10^9$ pillars.

In one or more embodiments, a height h (see Fig. 1B) of the nanopillars, i.e. the distance from the top surface 11a of the base 11 to the top surface 12a of the nanopillars 12, may be in the range of 100 nm to 10,000 nm (10 $\mu$m), preferably in the range of 200 nm to 8,000 nm (8 $\mu$m), more preferably in the range of 300 nm to 5,000 nm, even more preferably in the range of 400 nm to 1,000 nm. In a specific embodiment the height h may be about 500 nm. The height h of the nanopillars 12 determines the distance between the first and the second layers 21, 22. When the height h is substantially below 100 nm or substantially above 10 $\mu$m the electric fields excited in the first and second plasmonic layers 21, 22 can hardly couple. When the height h is in the range as set forth above, the superposition and coupling of the electric fields becomes high and hence the electric field enhancement becomes high leading to an improvement of the signal-to-noise ratio.

The nanopillars 12 may further have a cross-sectional width w (see Figs. 1B, 1C) in the range of 20 nm to 1000 nm, preferably in the range of 40 nm to 400 nm, more preferably in the range of 50 nm to 350 nm, even more preferably in the range of 80 nm to 300 nm. In a specific embodiment the width w may be about 200 nm. In the context of the present disclosure, the width w denotes the shortest distance of the cross-section. In case of a circular cross-section, the width w is equal to the diameter. In case of a rectangular cross-section, the w corresponds to the short side. When the width w is substantially higher than 1000 nm, the distance between the central area of the second layer 22 on the top of the pillars 12 and the first layer 21 provided of the base 11 becomes high, leading to a reduction of the coupling of the electric fields and thus to a reduction of electric field enhancement. On the other hand, when the width w is substantially below 20 nm the available space for placing target species to be examined becomes small and thus the Raman signal becomes low. Moreover, the electric field enhancement becomes low.

Irrespective of the arrangement pattern, the nanopillars 12 may be arranged at a pitch distance p (see Figs. 1B, 1C) in the range of 50 nm to 1000 nm, preferably in the range of 100 nm to 800 nm, more preferably in the range of 150 nm to 750 nm, even more preferably in the range of 200 nm to 600 nm. In a specific embodiment the width w may be about 300 nm. In the context of the present disclosure, the pitch distance p denotes the length of a repeating pattern, that is the distance from one point on the circumference of one nanopillar to the corresponding point on the circumference of the nanopillar 12 being next to the one nanopillar in one direction. When the nanopillars 12 are arranged in lines, as shown in Figure 1C, the pitch distance p1 along one direction (here, the x-direction) may be the same as or different to the pitch distance p2 along another direction (here, the y-direction). In case of a random distribution of the nanopillars 12, the pitch distance p refers to the average pitch distance. When the pitch distance p is substantially below 50 nm the available space on the first layer 21 for placing target species to be examined becomes small and thus the emitted or absorbed signal (e.g., Raman signal) becomes low. Moreover, when the pitch distance p is substantially below 50 nm or substantially higher than 1000 nm, the coupling of the electric fields excited in the top layers 22 of two neighbouring nanopillars 12 is reduced, leading to a reduction of electric field enhancement.

A specific embodiment of a SERS substrate according to the present invention may have the following dimensions:

h = 400 to 1,000 nm, for example 500 nm;

w = 100 to 400 nm, for example 200 nm

p = 100 to 600 nm, for example 300 nm

t1 = t2 = 50 to 200 nm, for example 100 nm

Second Embodiment

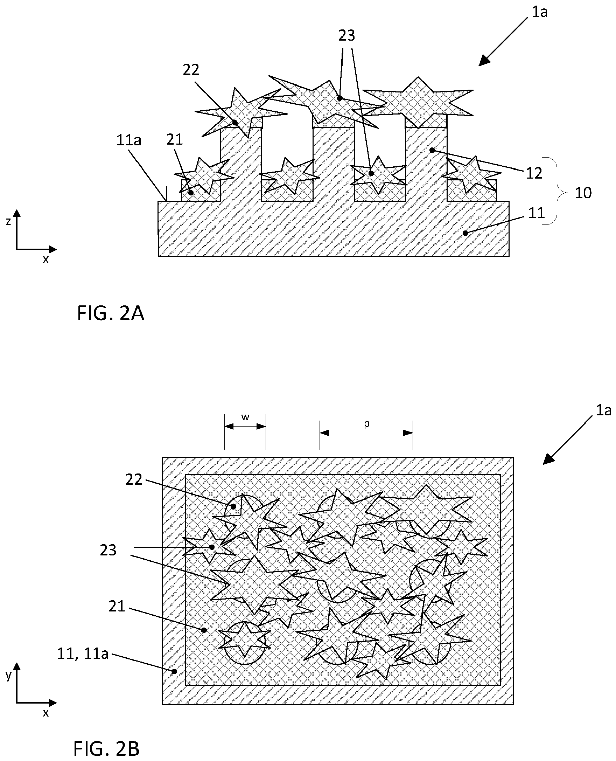

Figure 2 shows a SERS substrate 1a according to a second embodiment in a strongly schematic representation. Figures 2A shows a side section view, and Figure 2B shows a top view.

Like reference numerals denote like elements as in Fig. 1, and redundant descriptions are omitted.

The SERS substrate 1a according to the second embodiment differs from the first embodiment in that the SERS substrate 1a additionally comprises nanosized sharp-edged structures 23 of a plasmonic material provided on the first layer 21 and/or the second layer 22. Preferably, the nanosized sharp-edged structures 23 are provided on both of the first and second layer 21, 22, as shown in Figures 2A and 2B. In one or more embodiments, the sharp-edged structures 23 may be grown on the first layer 21 and/or the second layer 22. In particular, the sharp-edged structures 23 may be materially connected to the layers 21, 22.

It is known that the electric field enhancement induced in plasmonic structures is particularly high at edges and corners of the structure, especially in sharp-edged structures. Thus, the presence of the sharp-edged structures 23 leads to a further improvement of the electric field enhancement.

In preferred embodiments, the sharp-edged structures 23, in particular those provided on the second plasmonic layer 22 on the pillar tops, may extend over the edges of the nanopillars 12. In other words, the width of the sharp-edged structures 23 may be larger than the width w of the nanopillars 12. It is even more preferred that the sharp-edged structures 23 extend so that neighbouring structures 23 contact each other or even merge together by material connection. In this case, a more or less continuous layer of merged sharp-edged structures 23 is provided. When the sharp-edged structures 23 contact each other or are merged together, share of electrons or electron flow between adjacent structures 23 is enabled. Furthermore, this creates another nanohole pattern, in addition to the pattern of nanoholes 21h in the first plasmonic layer 21. The additional pattern of nanoholes has the effect to further increase the electric field enhancement. On the other hand, the sharp-edged structures 23 provided at the bottom level on the first layer 21 have limited room to grow during their growth and therefore maybe smaller than those arranged on the top of the nanopillars 12. When adjacent nanostructures (e.g., nanostars) provided on the tops of adjacent nanopillars merge together, a nanohole is formed between the neighbouring nanostructures (here, between each four merged nanostructures).

The sharp-edged structures 23 may be selected from nanostars, as shown in Fig. 2, or from nanoflowers, or mixtures of both. Nanostars have a central portion with sharp cone-shaped protrusions extending therefrom in any directions. On the other hand, nanoflowers have a central portion with sharp cone-shaped protrusions extending therefrom predominantly in one plane.

The plasmonic material of the sharp-edged structures 23 may be selected from the materials described for the first and second layer 21, 22. Moreover the plasmonic material of the sharp-edged structures 23 may be the same material as in the first and second layer 21, 22 or may be different.

Further Embodiments

Figure 3 shows a side section view of a SERS substrate 1b according to a third embodiment.

Like reference numerals denote like elements as in Fig. 1, and redundant descriptions are omitted.

The SERS substrate 1b according to the third embodiment differs from the first embodiment in that the SERS substrate 1b additionally contains a continuous coating layer 30 and the first layer 21 and the second layer 22 are provided on the coating layer 30.

The coating layer 30 may extend substantially over the whole top surface of the base substrate 10, including the base 11 and the nanopillars 12.

In embodiments, the coating layer 30 is formed of a non-conductive (isolating) material, such as an oxide. For example, the oxide is selected from $SiO_2$, $Al_2O_3$ or $HfO_2$.

The thickness of the coating layer 30 is not particularly limited and may be in the range of 5 nm to 200 nm, for instance it is about 50 nm.

In addition, a third layer 24 of a plasmonic material is provided between the top surfaces 12a of the nanopillars 12 and the coating layer 30.

The plasmonic material of the third layer 24 may be selected from the materials described for the first and second layer 21, 22. Moreover the plasmonic material of the sharp-edged structures 23 may be the same material as in the first and second layer 21, 22 or may be different.

The structure of the SERS substrate 1b according to the third embodiment has the additional effect that the electric fields excited in the second layer 22 and the third layer 24 may superimpose and amplify each other leading to a further improvement of the electric field enhancement.

According to further embodiment (not shown), nanosized sharp-edged structures 23 as described in the second embodiment are provided on the first layer 21 and/or the second layer 22.

Figure 4 illustrates a top view of a SERS substrate 1c according to a forth embodiment.

Like reference numerals denote like elements as in Fig. 1, and redundant descriptions are omitted.

The SERS substrate 1c according to the fourth embodiment differs from the first embodiment in that the nanopillars 12 have a rectangular, preferably a square cross-section.

In the shown embodiment, the nanopillars are arranged so that the corners of the squares face the corner of adjacent squares. This configuration allows a further improvement of the electric field enhancement.

Production Method

According to another aspect of the present disclosure, a method for manufacturing the SERS substrate according to the present invention is provided.

The method comprises the general steps of:

(a) a patterning process of providing a pattern of nanodisks of a masking material on a surface of the substrate body;

(b) subjecting the substrate body having the array of nanodisks to an etching process so as to remove unprotected (unmasked) material of the substrate body and to obtain the base substrate comprising the base and an array of nanopillars provided on a surface of the base; and

(c) removing the (remaining) pattern of nanodisks; and

(d) depositing a plasmonic material on the base substrate having the array of nanopillars to obtain a first layer of the plasmonic material provided on the surface of the base and a second layer of a plasmonic material provided on a top surface of the nanopillars.

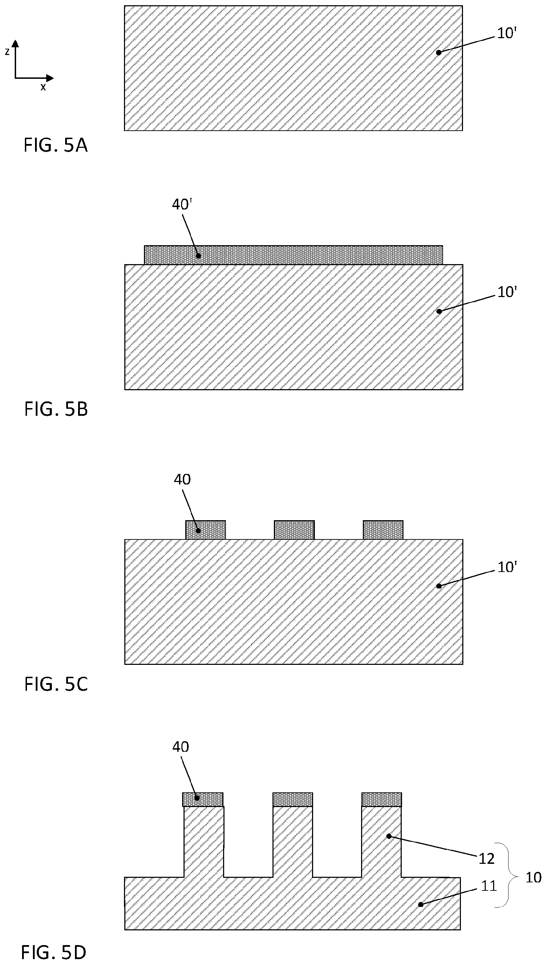

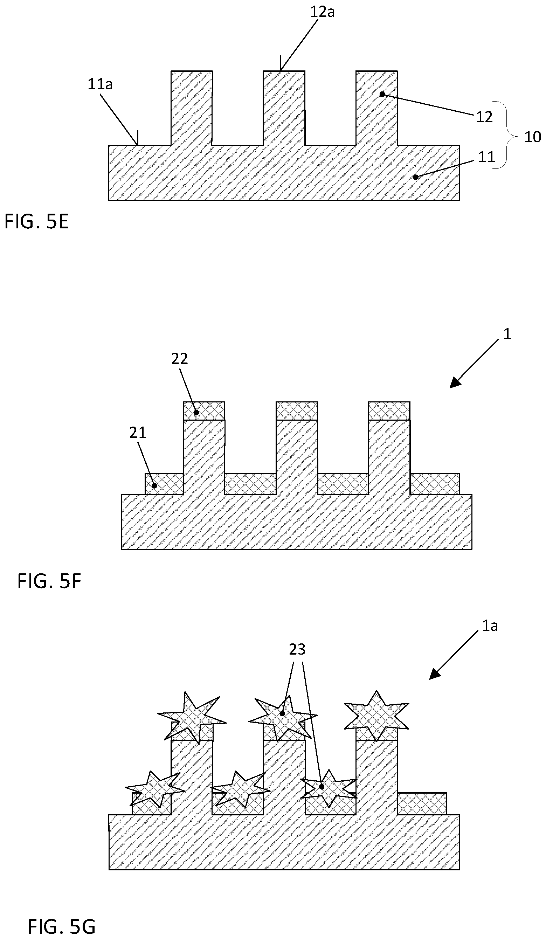

The method will be further explained referring to Figure 5. Preferably, the method is conducted at least in parts in a controlled environment, in particular in a clean room environment.

As shown in Fig. 5A, in a first step there is provided a substrate body 11' which is a workpiece for the production of the base substrate 10. Thus, the substrate body 11' comprises the materials set-forth above with respect to the base substrate 10.

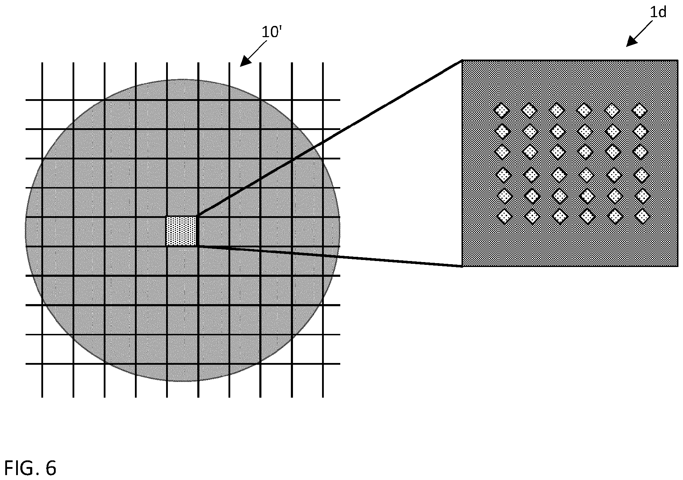

The substrate body 10' is preferably a substantially flat body having two main surfaces which are substantial parallel to each other (i.e. the lower and upper surfaces as illustrated in Fig. 5A). On the other hand, the substrate body 10' may have any shape when seen from the top (along the z axis), for example a rectangular shape, a square shape, a circular shape, an oval shape. In a specific embodiment the substrate body 10' may be a wafer, in particular a silicon wafer as shown in Fig. 6.

In the next step, the substrate body 10' is subjected to a patterning process of providing a pattern of nanodisks 40 of a masking material on a surface of the substrate body 10'. The patterning process preferably involves a nanolithography technique, preferably electron-beam lithography, nanoimprint lithography, quantum optical lithography or Talbot Displacement Lithography. The principle of the electron-beam lithography technique is described in Figures 5B and 5C.

As shown in Fig. 5B, a continuous masking layer 40' is applied on a surface of the substrate body 10'. In embodiments, the masking material may be an electron-beam sensitive resist material which undergoes chemical transformation upon irradiation with an electron beam. Typically, the resist material may be an uncured resin that cures upon electron irradiation (negative resist). Instead of organic materials, inorganic materials such as hydrogen silsesquioxane (HSQ) may be used likewise as masking material.

After application of the resist layer 40' comprising an uncured resist/mask material the surface of the masking layer 40' is locally irradiated with an electron beam so as to locally cure the resin/masking material. The irradiation is performed as to selectively irradiate only the sites where the masking nanodisks 40 are to be formed (in the developing process). The curing step can also be supplemented with heat in a hot plate or oven. After the electron-beam irradiation, the remaining uncured resist material is removed so that only the cured resist remains on the substrate body 10' in the form of a pattern of nanodisks 40 as shown in Fig. 5C.

Alternatively, the resist/mask material of the masking material layer 40' is a material which is chemically transformed upon exposing it to the electron beam resulting in a material that can be selectively removed after irradiation (positive resist). In this case, the irradiation is performed so as to selectively irradiate only the sites where the nanodisks 40 are not to be formed.

The pattern of nanodisks 40 obtained in this process can be used directly as an etching mask or can be used to pattern another material (e.g., oxide $SiO_2$) that serves as non-resist mask for etching step.

Since the circumferential shape of the nanodisks 40 will define the cross-section of the nanopillars 12 to be produced, the description of the cross-sections of the nanopillars 12 set forth above applies to the nanodisks 40 likewise. Hence, the circumferential shape of the nanodisks 40 may be circular (as shown in Figure 1C), oval, elliptic, triangular, rectangular, square (as shown in Figure 4), pentagonal, hexagonal or may even be an irregular shape. The circumferential shapes of the nanodisks 40 may be the same or different shapes may be provided on the substrate body 10'.

Next, the substrate body 10' having the pattern or array of nanodisks 40 is subjected to an etching process so as to remove unprotected material of the substrate body 10' (i.e. material of the substrate body not covered by the nanodisks 40) to obtain the base substrate 10 comprising the base 11 and an array of nanopillars 12 having nanodisks 40 of resist material on their top surfaces (Fig. 5D).

The etching process may involve physical and/or chemical etching or irradiation with an energy beam suitable to remove the material of the substrate body 10'. The etching process is preferably selected such that it has a good selectivity with respect to the material 10 to be etched and the masking material 40 to resist etching. For example, the etching process may apply isotropic plasma etching (e.g. $SF_6$ or a combination with a chemically inert passivation layer $C_4F_8$), such as deep reactive-ion etching (DRIE), which is for instance suitable for etching Si materials.

The remaining masking material of the nanodisks 40 is subsequently removed obtaining the base substrate 10 comprising the base 11 and an array of nanopillars 12 provided on a surface of the base 11 (Fig. 5E). The removal may be achieved by a chemical or an etching technique having good selectivity with respect to the masking material, such as $O_2$ plasma etching.

Next, a plasmonic material is deposited on the base substrate 10 to obtain a first layer 21 of the plasmonic material provided on the surface 11a of the base and a second layer 22 of a plasmonic material provided on the top surfaces 12a of the nanopillars 12. The result of the deposition step is a SERS substrate 1 according to the invention as shown in Fig. 5F.

In preferred embodiments, the deposition of the plasmonic material is performed so that the first layer 21 and second layer 22 are simultaneously formed. This allows to save a process step reducing the fabrication time.

Preferably, the deposition involves sputtering the plasmonic material onto the surfaces 11a, 12a. When sputtering is conducted in a direction perpendicular to the surfaces 11a, 12a substantially no plasmonic material is deposited at the lateral side surfaces of the nanopillars 12.

In a preferred optional subsequent step, at least a part of the plasmonic material of the first layer 21 and/or of the second layer 22 is chemically transformed to nanosized sharp-edged structures 23 (here nanostars) to obtain the SERS substrate 1a shown in Fig. 5G.

Preferably the chemical transformation is achieved by a method selected from Seed-Mediated Growth, Electrochemical Reduction, Surfactant-Assisted Synthesis, such as HEPES-driven synthesis, DMF-driven synthesis, ascorbic acid(AA)-driven synthesis, and Good's buffer reagent, 2-[4-(2-hydroxyethyl)-1-piperazinyl]propanesulfonic acid (EPPS). Suitable procedures are described by Demille et al. (Demille, T. B., Hughes, R. A., Dominique, N., Olson, J. E., Rouvimov, S., Camden, J. P., & Neretina, S. (2020). Large-area periodic arrays of gold nanostars derived from HEPES-, DMF-, and ascorbic-acid-driven syntheses. Nanoscale, 12(31), 16489-16500, doi.org/10.1039/D0NR04141F1-11), Bohdan Andreiuk et al. (Design and synthesis of gold nanostars-based SERS nanotags for bioimaging applications, doi: 10.7150/ntno.61244), Brian Becerril-Castro et al. (Gold Nanostars: Synthesis, Optical and SERS Analytical Properties, doi.org/10.1002/anse.202200005) or in WO 2023/031940 A1, for example.

When nanoflowers are to be produced instead of nanostars, the top surfaces of the plasmonic layers 21, 22 are partially covered by in inert material layer so that the protruding structures are formed substantially laterally, as an example for its fabrication.

According to a modified fabrication method of the SERS substrate of the invention, the manufacturing process described above is conducted using a substrate body 10' having a comparable large area, followed by dicing as to obtain a plurality of SERS substrates.

As illustrated in Figure 6 (top view), in the modified fabrication method a silicon wafer may be used as a large area substrate body 10'. For example, a circular silicon wafer may be used having a diameter of 1 inch or larger, such as 2, 3, 4 inch or more.

After conducting the process steps as explained in connection with Figures 5A to 5F and optionally 5G, the wafer comprises a plurality of arrays each comprising the nanopillars and the first and second plasmonic layers and optionally the nanosized sharp-edged structures.

Then, the wafer is diced as to obtain the plurality of pieces each being a SERS substrate 1d as shown in the enlarged view on the right. For example, the pieces can have a squared shape (as shown in Fig. 6), a rectangular shape, a triangular shape, a circular shape and so on. For example, the square or rectangular pieces may have a side length of 1 to 20 mm, such as 7 mm x 7 mm, 1 mm x 20 mm, etc.. The array of nanopillars may have a side length (or diameter) of 5 $\mu$m to 5 mm, for instance 300 $\mu$m (300 $\mu$m x 300 $\mu$m). Alternatively, dicing may be performed as to obtain pieces including more than one array nanopillars, which may be arranged in one or more rows, for example 3 rows of 10 columns.

Use of the SERS Substrate

Another aspect of the present disclosure refers to a method of using the SERS substrate according to the present invention. The method comprises

(i) immobilising a target species to the first layer 21 of plasmonic material and to the second layer 22 of plasmonic material;
(ii) irradiating ultraviolet, visible or infrared light onto the first layer 21 and the second layer 22 carrying the adsorbed target species; and
(iii) detecting light emitted or absorbed by the target species.

The immobilisation of the target species may involve any technique allowing to hold the target species in close proximity to surface of the first and second layer 21, 22. For instance, the immobilisation may comprise adsorption of the target species on the surfaces.

The immobilisation may be performed by applying a mixture containing the target species and a suitable solvent onto the SERS substrate. If required, the solvent may be removed prior to the irradiation step, for instance, the solvent may be evaporated.

The target species to be examined may be any low-molecular or high-molecular, organic (including biological) or inorganic materials. The target species may include, for example, antibodies or aptamers

The light emitted or absorbed by the target species may include scattered light, fluorescence, and/or surface enhanced infrared absorption (SEIRA).

Preferably, the irradiation is achieved by using a laser. Especially in case of RAMAN applications, the excitation laser is monochromatic. However, use of monochromatic lasers is not mandatory for the fluorescence applications, and not desirable for SEIRA applications.

The detection may be achieved by any suitable detector, preferably by confocal devices in order to limit the detection volume.

Due to the strong electric field enhancement enabled by the SERS substrate according to the invention and due to large plasmonic active area provided by the SERS substrate according to the invention, high intensities of emitted light, such as Raman scattering light, are obtained leading to very high signal-to-noise ratios and sensitivities. This allows use of confocal lasers having very small spot sizes.

It should be noted that the SERS substrate according to the invention may also be used for plasmon-enhanced chemical applications, such as the examination of catalysis.

Simulations

The effect of the SERS substrate according to the invention is demonstrated by simulations of the electric field enhancement for various objects.

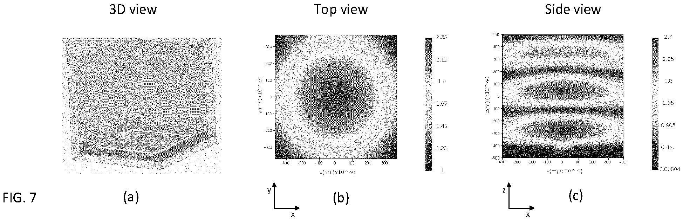

The results of the simulations are shown in Figures 7 to 9, wherein Figures 7A, 8A and 9A show the objects for which the simulations were performed. Figures 7B, 8B and 9B show the distribution of the obtained enhancement factor in a top view of the object, and Figures 7C, 8C and 9C show the distribution of the obtained enhancement factor in a side view of the object.

The electric field enhancement is expressed by the enhancement factor when the plasmonic material is irradiated with light. Here, the enhancement factor EF is defined as

$$EF = \left| \frac{E_{exc}}{E_0} \right|^2 \left| \frac{E_{em}}{E_0} \right|^2$$

wherein $E_0$ is the amplitude of the of the input source electric field, $E_{exc}$ is the electric field of an excitation light, and $E_{em}$ is the electric field associated with the emitted light.

Numerical analysis of the electric field distribution was performed using the commercially available software FDTD Solutions (Ansys-Lumerical). The simulation results were produced by treating the localized nanostructures as uniform using periodic boundary conditions along the x- and y-axes. Perfect matching layers (PML) were applied to eliminate any reflection in the top and the bottom boundaries. A non-uniform mesh with a maximum mesh step of 3 nm was applied. The material parameters used for gold were from the Johnson and Christy 1972 model and Si used in built-in parameters. Single plane excitation of 785 nm was placed at in the centre (x,y)=(0,0) and z=400nm with propagation along negative z-axis.

In the simulation illustrated in Figure 7, the object was a flat layer of gold including a square nanohole of 100 nm x 100 nm (Fig 7A). This object simulates the first layer 21 of plasmonic material having a (single) nanohole 21h, in the absence of the second layer 22.

As can be seen in Figures 7B and 7C, the strongest enhancement was obtained over the centre of the nanohole (Fig. 7B). Moreover, stratified clouds of electric fields were present in the z dimension over the nanohole in the side view (Fig. 7C). The maximum EF was about 2.4 in the top view and about 2.7 in the side view.

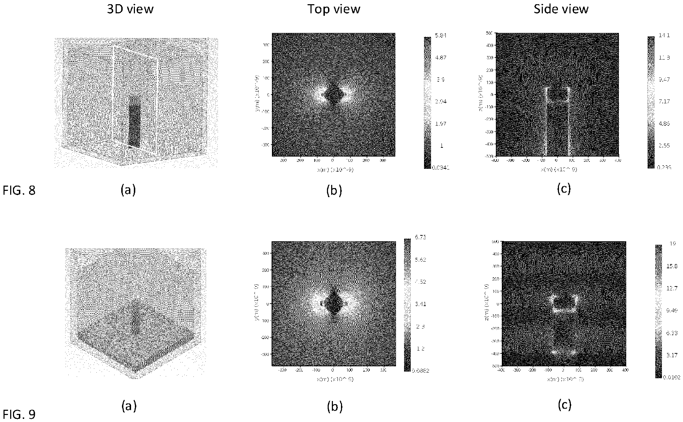

In the simulation illustrated in Figure 8, the object was a single nanopillar having a square cross-section with a side length of 100 nm and having a gold layer on its top surface having a thickness of 100 nm (Fig 8A). Thus, the gold layer had the form of a nanocube with 100 nm side length. This object did not contain the flat bottom layer of gold of Fig. 7. This object simulates the second layer 22 of plasmonic material provided on the top surface 12a of a nanopillar 12.

As can be seen in Figures 8B and 8C, a strong field enhancement was seen at two opposite corners of the Au layer (Fig. 8B). The maximum EF was about 5.8 in the top view and about 14 in the side view.

In the simulation illustrated in Figure 9, the object was a flat layer of gold including a square nanohole of 100 nm x 100 nm and a single nanopillar having a square cross-section of 100 nm x 100 nm and having a gold layer on its top surface having a thickness of 100 nm (Fig 9A). Thus, the gold layer had the form of a nanocube with 100 nm side length. This object simulates the combination of the first plasmonic layer 21 and the second plasmonic layer 22 provided on the top surface 12a of a nanopillar 12 according to the invention.

As can be seen in Figures 9B and 9C, the strongest enhancement was seen at two opposite corners of the Au layer (Fig. 9B). The maximum EF was about 6.7 in the top view and about 19 in the side view.

This simulation capability of the SERS substrate of the present invention to obtain coupling and enhancements of the electric fields excited from the first and second plasmonic layers 21 and 22 leading to particular strong local field enhancements.

**Reference signs**

| | |
|---|---|
| 1 | SERS substrate |
| 1a-d | SERS substrate |
| 10 | base substrate |
| 10' | substrate body |
| 11 | base |
| 11a | top surface of base |
| 12 | nanopillar |
| 12a | top surface of nanopillar |
| 21 | first plasmonic layer |
| 21h | nanohole |
| 22 | second plasmonic layer |
| 23 | nanosized sharp-edged structure |
| 20 | base body / wafer |
| 20a | top surface of base body |
| 40' | masking layer |
| 40 | masking pattern |
| | |
| h | height of nanopillars |
| p | pitch |
| w | width of nanopillars |
| t1 | thickness of first layer |
| t2 | thickness of second layer |

**Claims**

1. SERS substrate (1, 1a-d) for plasmon-enhanced optical and chemical applications such as surface-enhanced Raman scattering, SERS, comprising:

   a base substrate (10) comprising a base (11) and an array of nanopillars (12) provided on a surface (11a) of the base (11) and extending upwardly therefrom;
   a first layer (21) of a plasmonic material provided on the surface (11a) of the base (11); and
   a second layer (22) of a plasmonic material provided on a top surface (12a) of the nanopillars (12).

2. The SERS substrate (1a) according to claim 1, further comprising nanosized sharp-edged structures (23) of a plasmonic material provided on the first layer (21) and/or the second layer (22), wherein the nanosized sharp-edged structures (23) are preferably nanostars and/or nanoflowers.

3. The SERS substrate (1b) according to claim 1 or 2, wherein the base substrate (10) has a continuous coating layer (30) and the first layer (21) and the second layer (22) are provided on the coating layer (30), wherein a third layer (24) of a plasmonic material is provided between the top surface (12a) of the nanopillars (12) and the coating layer (30).

4. The SERS substrate (1, 1a-d) according to any one of the preceding claims, wherein the plasmonic material of the first layer (21), the second layer (22), the third layer (24) and the nanosized sharp-edged structures (23) is independently selected from the group comprising gold (Au), silver (Ag), platinum (Pt), palladium (Pd), copper (Cu), chromium (Cr), titanium, (Ti), aluminum (Al), and alloys thereof.

5. The SERS substrate (1, 1a-d) according to any one of the preceding claims, wherein the nanopillars (12) are regularly or randomly distributed on the surface (11a) of the base (11) and/or a cross-section of the nanopillars (12) has a circular, oval, elliptic, triangular, rectangular, square pentagonal, hexagonal or an irregular shape.

6. The SERS substrate (1, 1a-d) according to any one of the preceding claims, wherein the nanopillars (12) are integrally formed with the base substrate (11).

7. The SERS substrate (1, 1a-d) according to any one of the preceding claims, wherein the nanopillars (12) have a height (h) in the range of 100 nm to 10 $\mu$m.

8. The SERS substrate (1, 1a-d) according to any one of the preceding claims, wherein the nanopillars (12) have a cross-sectional diameter or width (w) in the range of 20 nm to 1000 nm.

9. The SERS substrate (1, 1a-d) according to any one of the preceding claims, wherein the nanopillars (12) are arranged at a pitch distance (p) in the range of 50 nm to 1000 nm.

10. The SERS substrate (1, 1a-c) according to any one of the preceding claims, wherein the first layer (21) and/or the second layer (22) have a thickness (t1, t2) in the range of 0.1 nm to 900 nm.

11. A method for manufacturing the SERS substrate (1, 1a-d) according to any one of the preceding claims, the method comprising the steps:

   (a) a patterning process of providing a pattern of nanodisks (40) of a masking material on a surface of a substrate body (10');
   (b) subjecting the substrate body (10') having the pattern of nanodisks (40) to an etching process so as to remove unprotected material of the substrate body (10') and to obtain the base substrate (10) comprising the base (11) and an array of nanopillars (12) provided on a surface (11a) of the base (11);
   (c) removing the pattern of nanodisks (40); and
   (d) depositing a plasmonic material on the base substrate (10) having the array of nanopillars (12) to obtain a first layer (21) of the plasmonic material provided on the surface (11a) of the base (11) and a second layer (22) of a plasmonic material provided on a top surface (12a) of the nanopillars (12).

12. The method according to claim 13, wherein the patterning process (a) involves a nanolithography technique, preferably electron-beam lithography or nanoimprint lithography.

13. The method according to claim 11 or 12, wherein the deposition step (d) involves thin film deposition, such as Atomic Layer Deposition (ALD), Electroplating, Molecular Beam Epitaxy (MBE), Physical Vapor Deposition (CVD), Physical Vapor Deposition (PVD), preferably Sputtering techniques.

14. The method according to any one of claims 11 to 13, further comprising:
   (e) chemically transforming at least a part of the plasmonic material of the first layer (21) and/or of the second layer (22) to nanosized sharp-edged structures (23), preferably by a method selected from Seed-Mediated Growth, Electrochemical Reduction, Surfactant-Assisted Synthesis such as HEPES-driven synthesis, DMF-driven synthesis and AA-driven synthesis.

15. Method of using the SERS substrate (1, 1a-d) according to any one of claims 1 to 10 comprising

   (i) immobilising a target species to the first layer (21) of plasmonic material and to the second layer (22) of plasmonic material;
   (ii) irradiating ultraviolet, visible and/or infrared light onto the first layer (21) and the second layer (22) carrying the target species; and
   (iii) detecting light emitted or absorbed by the target species.

FIG. 1A

FIG. 1B

FIG. 1C

FIG. 2A

FIG. 2B

FIG. 3

FIG. 4

FIG. 5A

FIG. 5B

FIG. 5C

FIG. 5D

FIG. 5E

FIG. 5F

FIG. 5G

FIG. 6

3D view                    Top view                    Side view

FIG. 7              (a)                  (b)                  (c)

3D view  Top view  Side view

FIG. 8          (a)                    (b)                    (c)

FIG. 9          (a)                    (b)                    (c)

Europäisches
Patentamt
European
Patent Office
Office européen
des brevets

# EUROPEAN SEARCH REPORT

**Application Number**

EP 24 17 4583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEI GENG ET AL: "Gold nanochestnut arrays as ultra-sensitive SERS substrate for detecting trace pesticide residue", NANOTECHNOLOGY, INSTITUTE OF PHYSICS PUBLISHING, BRISTOL, GB, vol. 29, no. 29, 18 May 2018 (2018-05-18), page 295502, XP020328779, ISSN: 0957-4484, DOI: 10.1088/1361-6528/AAC22B [retrieved on 2018-05-18] | 1,2, 4-10,15 | INV. G01N21/65 B82Y40/00 B82Y30/00 B82Y20/00 |
| Y | * the whole document * | 3,4,14 | |
| X | US 2019/017934 A1 (CHOU STEPHEN Y [US] ET AL) 17 January 2019 (2019-01-17) | 1,4-13, 15 | |
| Y | * paragraphs [0037] - [0091]; figures * | 14 | |
| X | US 8 786 852 B2 (BOND TIZIANA C [US]; MILES ROBIN [US] ET AL.) 22 July 2014 (2014-07-22) * column 4, line 46 - column 12, line 17; figures * | 1,4-6, 10,15 | |
| Y | LAVRIK NICKOLAY: "Modeling, fabrication, and characterization of disc on pillar structures for optical field enhancement and extreme nanofocusing", CLEO: 2013, THE OPTICAL SOCIETY, 9 June 2013 (2013-06-09), pages 1-2, XP032602982, [retrieved on 2014-06-12] * the whole document * | 3,4 | TECHNICAL FIELDS SEARCHED (IPC) G01N B82Y |

The present search report has been drawn up for all claims

| Place of search | Date of completion of the search | Examiner |
|---|---|---|
| Munich | 29 October 2024 | Politsch, Erich |

EPO FORM 1503 03.82 (P04C01)

## ANNEX TO THE EUROPEAN SEARCH REPORT
## ON EUROPEAN PATENT APPLICATION NO.

EP 24 17 4583

29-10-2024

| Patent document cited in search report | | Publication date | Patent family member(s) | | Publication date |
|---|---|---|---|---|---|
| US 2019017934 | A1 | 17-01-2019 | CN | 103026298 A | 03-04-2013 |
| | | | CN | 105911814 A | 31-08-2016 |
| | | | EP | 2572242 A2 | 27-03-2013 |
| | | | US | 2014045209 A1 | 13-02-2014 |
| | | | US | 2014374621 A1 | 25-12-2014 |
| | | | US | 2016258867 A1 | 08-09-2016 |
| | | | US | 2019017934 A1 | 17-01-2019 |
| | | | WO | 2012024006 A2 | 23-02-2012 |
| US 8786852 | B2 | 22-07-2014 | US | 2011128536 A1 | 02-06-2011 |
| | | | US | 2014333926 A1 | 13-11-2014 |
| | | | US | 2014335269 A1 | 13-11-2014 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2023031940 A1

### Non-patent literature cited in the description

- **DEMILLE, T. B.** ; **HUGHES, R. A** ; **DOMINIQUE, N** ; **OLSON, J. E., ROUVIMOV, S** ; **CAMDEN, J. P** ; **NERETINA, S.** Large-area periodic arrays of gold nanostars derived from HEPES-, DMF-, and ascorbic-acid-driven syntheses.. *Nanoscale*, 2020, vol. 12 (31), 16489-16500
- **BOHDAN ANDREIUK et al.** *Design and synthesis of gold nanostars-based SERS nanotags for bioimaging applications*
- **BRIAN BECERRIL-CASTRO et al.** *Gold Nanostars: Synthesis, Optical and SERS Analytical Properties*